# FASCICULE DE BREVET EUROPEEN

(11) **EP 0 963 891 B1**
(45) Date de publication et mention de la délivrance du brevet: **23.07.2003**
(21) Numéro de dépôt: 99401442.1
(22) Date de dépôt: 11.06.1999
(51) Int. Cl.: B60T 7/10

(54) **Mécanisme de frein à main pour véhicule automobile**
Handbremsmechanismus für ein Kraftfahrzeug
Handbrake mechanism for motor vehicle

(30) Priorité: 12.06.1998 FR 9807449
(43) Date de publication de la demande: 15.12.1999
(73) Titulaire: AUTOMOBILES PEUGEOT, 75116 Paris (FR); AUTOMOBILES CITROEN, 92200 Neuilly-sur-Seine (FR)
(72) Inventeur: Camincher, Luc, 94460 Valenton (FR)
(74) Mandataire: Armengaud Ainé, Alain

(56) Documents cités:
- DE-A- 4 228 381
- GB-A- 413 435
- GB-A- 2 198 217

## Description

La présente invention est relative à un mécanisme de frein à main, permettant d'immobiliser les roues arrière d'un véhicule automobile lorsqu'il est à l'arrêt, du genre comportant un levier monté pivotant sur un support fixe solidaire de la caisse du véhicule, ce levier exerçant un effort sur au moins un câble de transmission qui actionne des moyens de serrage assurant le blocage des roues.

Dans la plupart des véhicules, le frein à main est disposé sensiblement dans le plan médian de l'habitacle, le support sur lequel pivote le levier d'actionnement du câble étant disposé au voisinage du siège du conducteur, à côté de celui-ci.

Selon que le volant de direction est monté à gauche ou à droite vis-à-vis du châssis du véhicule, le levier du frein est manoeuvré par le conducteur avec sa main droite ou sa main gauche.

Cet agencement usuel du frein à main présente deux inconvénients. En premier lieu, si la largeur du véhicule est notable, l'espace entre les deux sièges avant peut être également non négligeable, de sorte que la position du levier du frein dans le plan médian de l'habitacle par rapport au côté du siège du conducteur peut de même être décalée d'une distance relativement importante, la préhension du levier et sa manoeuvre ne correspondant pas à une action parfaitement ergonomique par l'usager qui doit déporter sa main de cette même distance avant de tirer sur le levier.

Plus encore, la position centrale du levier gêne le passage de l'avant vers l'arrière du véhicule au centre de l'habitacle, ce qui n'est pas commode, le mécanisme de commande du frein occupant une place qui pourrait être autrement réservée à d'autres usages, par exemple pour le montage de divers accessoires (planche de commande comportant différents boutons d'actionnement de fonctions particulières à l'intérieur du véhicule, vide-poches, cendrier, etc...). Le document GB 413 435 divulgue le préambule de la revendication 1.

Pour pallier ces inconvénients, de nombreux véhicules comportent un mécanisme qui décale la position du levier de frein et de son support fixe en direction du siège du conducteur, de manière à être situé au plus près de celui-ci, l'axe de pivotement du levier s'étendant transversalement entre deux paliers espacés qui permettent, à partir d'une action de commande réalisée par le levier au voisinage d'une extrémité de cet axe, de renvoyer l'effort sur une pièce formant palonnier, disposée dans le plan médian du châssis pour répartir cet effort symétriquement sur les deux roues arrière.

Toutefois, cette solution conduit à une fabrication différente des pièces qui constituent le mécanisme de frein à main, selon que celui-ci est destiné à être monté à côté du siège de droite ou de gauche du véhicule.

La présente invention a pour objet un mécanisme de frein à main qui présente l'avantage de pouvoir être monté indifféremment à droite ou à gauche du plan médian de l'habitacle du véhicule, à côté de l'un ou de l'autre des deux sièges avant, selon le type de conduite adapté à ce véhicule.

A cet effet, le mécanisme considéré, comportant une barre d'actionnement montée à rotation autour d'un axe horizontal et s'étendant transversalement entre deux supports plans parallèles l'un à l'autre, disposés verticalement et solidaires de la caisse du véhicule à proximité des côtés en regard des sièges avant de celui-ci, la barre étant associée dans sa partie centrale à des moyens pour assurer la transmission d'un effort de traction sur au moins un câble de commande, l'un des supports étant muni d'un dispositif à encliquetage ou analogue, composé d'une rampe crantée propre à coopérer avec un cliquet porté par un levier de manoeuvre disposé au voisinage d'une des extrémités de la barre d'actionnement au droit de ce support pour permettre la rotation de la barre autour de son axe, ce levier comportant en outre un organe de déverrouillage apte à dégager le cliquet vis-à-vis de la rampe crantée pour libérer le mécanisme, se caractérise en ce que la rampe crantée est réalisée sur un secteur amovible, apte à être logé et immobilisé dans une de deux rainures de réception de même profil, prévues sur le support, ces deux rainures étant symétriques l'une de l'autre par rapport à un plan vertical passant par l'axe de la barre d'actionnement.

L'invention permet ainsi, lors du montage du mécanisme de frein à main dans l'habitacle du véhicule, de mettre en oeuvre indifféremment l'un ou l'autre des deux supports de la barre d'actionnement selon que le levier de manoeuvre coopérant avec la rampe crantée de ce support doit être disposé à droite ou à gauche du plan médian du véhicule, le secteur amovible comportant cette rampe étant, selon le cas, monté dans l'une ou l'autre des deux rainures de ce support.

Selon une autre caractéristique, le secteur amovible comportant la rampe crantée est serti au montage dans la rainure du support qui le reçoit.

Avantageusement, le secteur amovible comporte un organe détrompeur, constitué par un talon en relief propre à être engagé dans une mortaise de même profil, ménagée au fond de la rainure, ce talon occupant une position dissymétrique par rapport aux côtés latéraux du secteur de manière à garantir le montage correct de celui-ci dans sa rainure selon que le frein est disposé à droite ou à gauche dans le véhicule.

Dans un mode de réalisation préféré mais non limitatif, la mortaise recevant le talon du secteur présente un profil en forme de queue d'aronde.

Selon une autre caractéristique du mécanisme considéré, le levier de manoeuvre de la barre d'actionnement est limité dans son débattement par rapport au support et comporte à cet effet un élément d'arrêt, propre à venir en butée sur un des bords d'extrémité de la rainure dépourvue du secteur amovible muni de la rampe crantée.

Selon le cas, l'élément d'arrêt est constitué par un rétreint embouti sur le levier ou encore par un doigt transversal serti sur celui-ci. Par ailleurs et pour accroître sa rigidité, le levier est avantageusement constitué sous la forme d'un caisson embouti réalisé au moyen de deux demi-coquilles, assemblées et serties l'une contre l'autre.

De préférence et dans ce mode de réalisation notamment, le levier comporte des bossages latéraux, ménagés en relief vers l'intérieur du caisson, ces bossages étant en appui sur des pistes de glissement réparties sur les surfaces en regard du support. Avantageusement, les bossages sont au nombre de trois et répartis à 120° sur le support autour de l'axe de la barre d'actionnement.

Selon encore une autre caractéristique, la liaison entre la barre d'actionnement et le levier est réalisée par un moyeu serti ou soudé en bout de la barre et traversant un orifice ménagé dans le support, avec interposition d'une bague de frottement plastique ou métallique, le levier étant également serti ou soudé sur le moyeu. En variante, la liaison peut être réalisée au moyen de cannelures respectivement prévues sur la barre et sur le moyeu porté par le levier, par une goupille transversale solidarisant le moyeu et la barre, ou encore par emboîtement de l'extrémité de la barre présentant un profil à pans coupés dans un logement homologue du moyeu.

D'autres caractéristiques d'un mécanisme de frein à main conforme à l'invention apparaîtront encore à travers la description qui suit de divers exemples de réalisation, donnés à titre indicatif et non limitatif, en référence aux dessins annexés sur lesquels :
- La Figure 1 est une vue schématique en perspective du mécanisme considéré.
- Les Figures 2A et 2B montrent deux variantes d'un détail du montage de ce mécanisme.
- Les Figures 3A et 3B illustrent de façon plus détaillée la mise en place dans une rainure de l'un des supports du secteur amovible, permettant d'utiliser le levier de manoeuvre du côté gauche ou droit du mécanisme.
- Les Figures 4A et 4B sont des vues de côté, à plus grande échelle, du support du mécanisme et de ses rainures dont l'une reçoit le secteur amovible à rampe crantée.
- La Figure 5 illustre, à encore plus grande échelle, le profil du secteur amovible et de son talon de détrompage.
- La Figure 6 est une vue du support du mécanisme représenté avec le secteur amovible retiré, illustrant la position relative dans ses rainures des mortaises de réception du talon du secteur.
- Les Figures 7 et 8 illustrent, selon deux variantes de réalisation, les moyens de limitation du pivotement du levier de manoeuvre par rapport au support autour de l'axe de la barre d'actionnement.
- Les Figures 9 et 10 représentent respectivement, en vue de côté et de profil, le levier de manoeuvre avec ses bossages de guidage sur le support.
- La Figure 11 est une vue en coupe transversale partielle, illustrant le montage du levier de manoeuvre sur le support et les moyens de liaison mis en oeuvre pour solidariser ce levier avec la barre d'actionnement.
- Les Figures 12, 13 et 14 illustrent des variantes de réalisation des moyens de liaison.
- La Figure 15 est une vue en coupe transversale de la Figure 14 par un plan perpendiculaire à l'axe de la barre d'actionnement.
- Les Figures 16 et 17 illustrent un autre détail de réalisation du levier de manoeuvre.
- La Figure 18 illustre une vue en coupe transversale du levier de manoeuvre dans une partie de celui-ci extérieure au support.

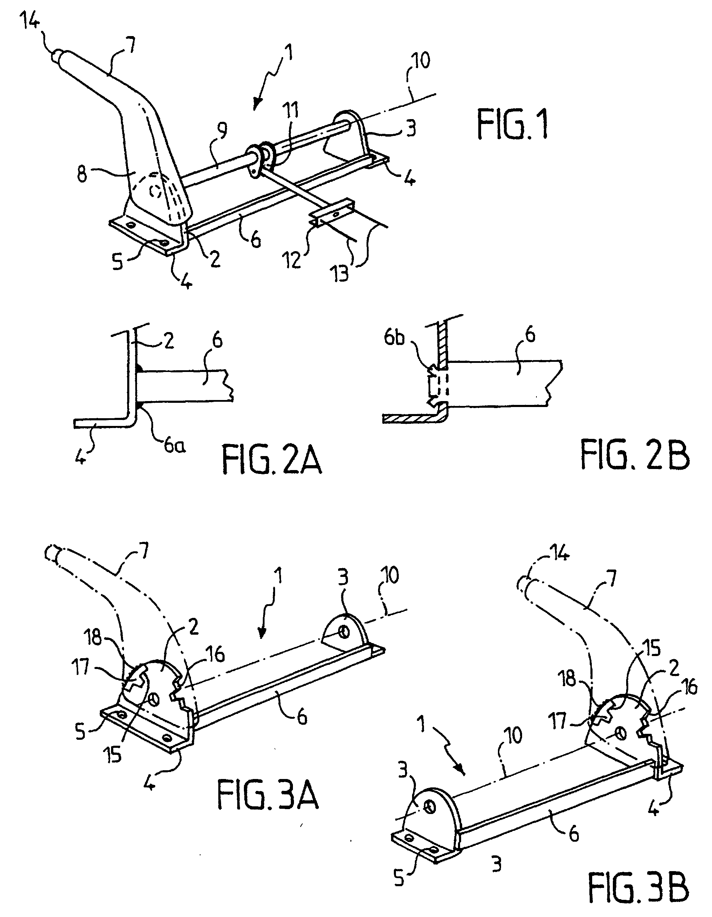

Sur la Figure 1, la référence 1 désigne dans son ensemble le mécanisme de commande pour frein à main, ici très schématiquement représenté.

Ce mécanisme comporte notamment deux supports plans parallèles, respectivement désignés sous les références 2 et 3, ces supports se présentant sous la forme de plaques métalliques comportant une extrémité sensiblement arrondie, ces supports s'étendant verticalement et étant munis à l'opposé d'un rebord 4 formant cornière de fixation sur le plancher de l'habitacle d'un véhicule (non représenté) au moyen de vis d'immobilisation 5.

Les deux supports sont convenablement solidarisés l'un avec l'autre au moyen d'une entretoise de liaison 6 qui s'étend parallèlement au plancher de l'habitacle, le mécanisme 1 étant disposé dans ce dernier entre les deux sièges avant du véhicule avec les supports 2 et 3 parallèles au plan médian du châssis.

Les deux supports 2 et 3 sont solidarisés avec les extrémités de l'entretoise 6 par tout moyen approprié, notamment par soudure 6a comme représenté sur la Figure 2A, ou encore par perçage du support et traversée partielle de celui-ci par l'extrémité de l'entretoise, cette extrémité étant ensuite rabattue et sertie contre le support comme illustré sur la Figure 2B.

Sur l'un des supports, ici le support 2 supposé disposé du côté et au voisinage du siège du conducteur, est monté un levier de manoeuvre 7, qui se présente de préférence sous la forme d'un caisson ou structure tubulaire fermée sur elle-même pour accroître sa rigidité, l'une des extrémités 8 du levier étant ouverte de manière à pouvoir venir coiffer partiellement l'extrémité arrondie du support 2.

Le levier 7 est par ailleurs rendu solidaire, d'une manière qui sera décrite plus en détail ultérieurement, d'une barre d'actionnement transversale 9, parallèle au plancher de l'habitacle et dont l'axe 10 s'étend par conséquent horizontalement, en étant perpendiculaire aux supports 2 et 3.

La barre d'actionnement 9 comporte en son milieu, c'est-à-dire sensiblement dans le plan médian de l'habitacle, une attache 11 avec un système de palonnier 12, permettant de transmettre à deux câbles parallèles 13 un effort de traction consécutivement au pivotement commandé du levier de manoeuvre 7, qui provoque simultanément la rotation de la barre 9, ces câbles permettant d'agir sur des moyens de serrage classiques (non représentés) propres à bloquer les roues arrière du véhicule.

Le levier de manoeuvre 7 comporte en bout, à l'opposé de son extrémité ouverte 8 coiffant le support 2, un bouton de déverrouillage 14, permettant notamment de libérer le frein à main, le mécanisme comprenant, de façon également bien connue dans la technique pour ce type d'appareil, une rampe crantée portée par le support, dont la forme de réalisation particulière et le montage correspondent à l'invention, cette rampe crantée coopérant avec un cliquet porté par le levier de manoeuvre et susceptible d'être actionné par le bouton de déverrouillage 14, la rampe et le cliquet n'étant pas représentés sur la Figure 1 pour éviter de surcharger inutilement celle-ci.

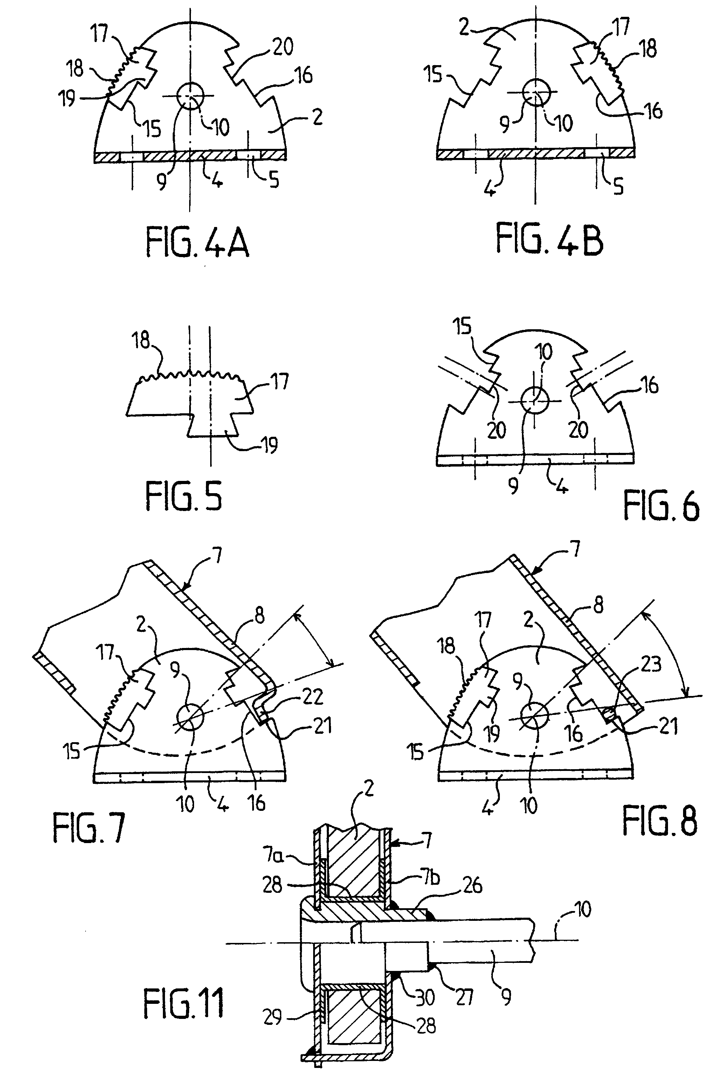

Sur les Figures 3A et 3B en revanche, sur lesquelles le levier de manoeuvre 7 a été représenté en traits mixtes, la barre d'actionnement 9 et le palonnier 12 étant omis, on voit que le support 2 qui coopère avec le levier comporte deux rainures, respectivement 15 et 16, dans l'une desquelles est logé un secteur amovible 17, celui-ci comportant dans sa surface externe la rampe crantée 18, comme on le voit plus précisément sur les Figures 4A et 4B.

Ces diverses figures permettent aisément de voir que, selon que le véhicule considéré comporte une conduite avec un volant situé du côté gauche ou du côté droit de l'habitacle du véhicule, le mécanisme de frein à main 1 étant toujours disposé entre les sièges avant, il convient d'aménager le support 2 coopérant avec le levier de manoeuvre 7 pour que le conducteur puisse le saisir par sa main droite ou sa main gauche selon le cas, ce levier devant être dans ces conditions situé à une extrémité ou à l'autre de la barre d'actionnement 9.

L'invention permet d'utiliser dans ces deux éventualités les mêmes composants, le support 2 qui coopère avec le levier de manoeuvre 7, à monter du côté droit ou du côté gauche du mécanisme 1, étant identique, seule étant modifiée la position relative du secteur amovible 17, logé dans l'une ou l'autre des rainures 15 et 16 du support, de telle sorte que la rampe crantée 18 de ce secteur soit toujours capable de s'encliqueter avec le cliquet du levier pour manoeuvrer les câbles 13 et assurer l'immobilisation des roues arrière.

Selon l'invention, les rainures 15 et 16 ont le même profil et sont symétriques l'une de l'autre par rapport au plan vertical qui contient l'axe 10 de la barre d'actionnement 9. En outre, le secteur amovible 17 comporte avantageusement un talon 19 (Figure 5), de préférence en forme de queue d'aronde, faisant fonction de détrompeur, ce talon venant s'engager dans une mortaise 20 de profil homologue, prévue dans le fond de chacune des rainures 15 ou 16, la position relative de la mortaise et par suite du talon qui s'y engage étant décalée dans chacune des rainures, pour créer une dissymétrie de l'une par rapport à l'autre et éviter que le secteur 17, destiné à équiper un frein à main pour conduite à gauche d'un véhicule, ne puisse être monté en position erronée dans un mécanisme prévu pour un véhicule à conduite à droite et vice versa, le secteur étant toujours adapté sur le support 2 dans le sens qui lui permet de coopérer par encliquetage avec le cliquet porté par le levier 7.

Bien entendu, les dispositions décrites ci-dessus sont seulement mises en oeuvre avec le support 2 coiffé par le levier de manoeuvre 7, le second support 3 étant un support plus simple, standard pour toute les réalisations envisagées.

Les Figures 7 et 8 illustrent un perfectionnement du mécanisme selon l'invention, permettant de limiter le mouvement de pivotement du levier 7, par rapport au support 2, autour de l'axe 10 de la barre d'actionnement 9.

A cet effet, la rainure 15 ou 16 dépourvue du secteur amovible 17 comportant la rampe crantée 18, est aménagée pour coopérer avec un élément de butée porté par le levier 7, cet élément venant s'appuyer contre l'un des bords 21 de cette rainure lorsque ce levier est en position relevée maximale, l'effort de traction sur les câbles 13 assurant le blocage des roues arrière.

Dans l'exemple illustré sur la Figure 7, l'élément de butée du levier 7 est constitué par un rétreint 22 ménagé à l'extrémité ouverte 8 du levier qui vient coiffer le support 2, ce rétreint s'engageant dans la rainure correspondante, ici la rainure 16, jusqu'à rencontrer en fin de course le bord 21.

Dans l'exemple illustré sur la Figure 8, l'élément de butée est constitué par un doigt transversal 23, convenablement serti sur l'extrémité du levier.

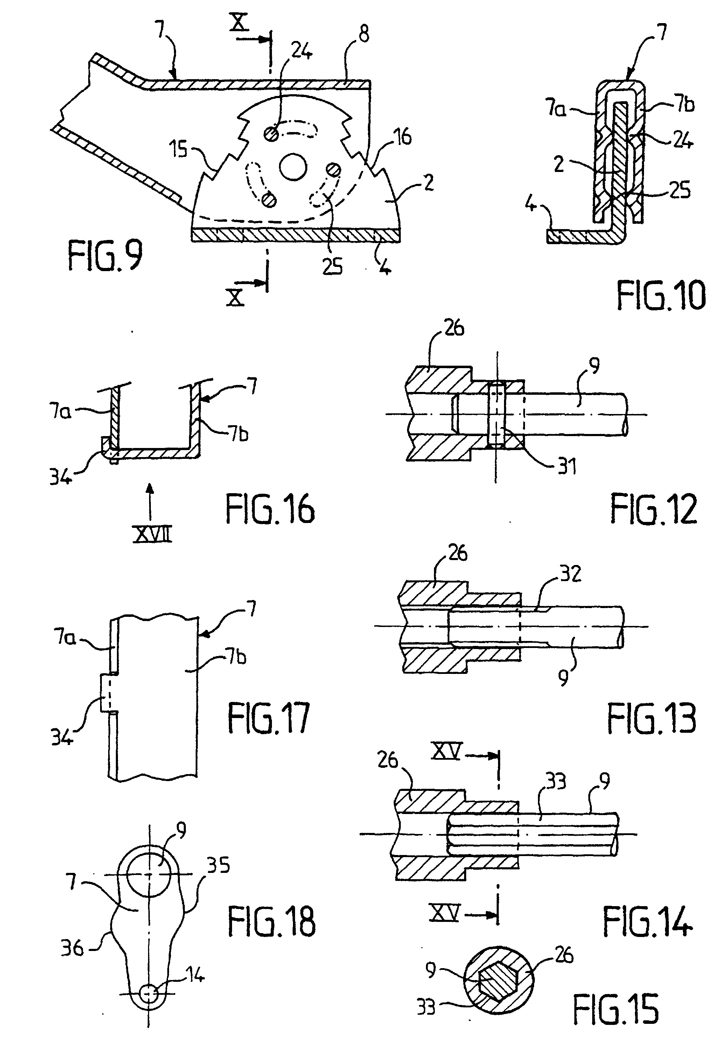

En outre, afin de faciliter le mouvement de débattement du levier 7 autour de l'axe 10 par rapport au support 2, et en particulier pour reprendre les efforts latéraux exercés sur ce levier lors de sa manoeuvre, la structure en caisson de celui-ci, notamment réalisée au moyen de deux demi-coquilles 7a et 7b, serties ou soudées l'une à l'autre, est avantageusement emboutie vers l'intérieur pour former des bossages 24 (illustrés sur les Figures 9 et 10), ces bossages, qui diminuent les jeux et la flexibilité transversale du levier, étant de préférence au nombre de trois et répartis à 120° l'un de l'autre.

Pour améliorer encore la tenue mécanique du montage, ces bossages s'appuient sur des pistes de glissement 25, ménagées sur les faces en regard du support 2, ces pistes présentant un développement angulaire correspondant à l'angle de pivotement maximal du levier.

Les Figures 11 à 18 illustrent enfin, selon diverses variantes de réalisation, différentes possibilités de montage de la barre d'actionnement 9 vis-à-vis du support 2, en fonction des moyens mis en oeuvre pour solidariser le levier avec la barre.

Sur la Figure 11, l'extrémité correspondante de la barre 9 est ainsi solidarisée avec un moyeu 26, soudé en 27 sur la barre. Ce moyeu traverse librement un orifice 28 prévu dans le support 2, avec de préférence interposition d'une bague de frottement 29, en matière plastique, armée ou non, ou encore métallique, permettant de maintenir constant dans le temps le couple de frottement.

Les demi-coquilles 7a et 7b formant la structure en caisson du levier 7 s'appliquent contre les bords de la bague, avant que le levier ne soit rendu solidaire du moyeu par soudure 30 ou sertissage. Le levier peut donc ainsi transmettre à la barre 9 le couple de rotation souhaité, en pivotant sur le support, selon un mouvement au cours duquel le cliquet coopère avec la rampe crantée du secteur amovible de la manière déjà précisée.

Dans d'autres variantes, l'extrémité de la barre 9 est solidarisée avec le moyeu 26 par une goupille transversale 31 (Figure 12), par des cannelures axiales 32 réparties autour de la surface de la barre et dans l'alésage du moyeu (Figure 13), ou encore en donnant à l'extrémité de cette barre 9 un profil à pans coupés 33, venant s'engager dans un logement homologue prévu dans le moyeu 26 (Figures 14 et 15).

Les deux demi-coquilles 7a et 7b du levier 7 sont emboîtées et serties l'une par rapport à l'autre en 34, comme représenté sur les Figures 16 et 17, ce levier pouvant par ailleurs comporter dans sa partie courante au-delà du support 2, un bossage extérieur 35 (Figure 18) propre à venir actionner un contacteur (non représenté), permettant l'allumage au tableau de bord d'un témoin pour serrage du frein à main. Avantageusement, le levier comporte un second bossage 36, dissymétrique du bossage 35, pour supprimer le risque d'inversion lors du montage de ce levier sur la barre d'actionnement.

On réalise ainsi un mécanisme de frein à main pour véhicule automobile présentant de nombreux avantages, notamment du fait de sa modularité, permettant l'utilisation d'un nombre de pièces réduit, en particulier autorisant une adaptation immédiate à un montage pour véhicule indifféremment à conduite à gauche ou à droite, avec une réduction sensible des coûts de fabrication et de main-d'oeuvre.

L'ensemble est robuste et rigide, permet de reprendre les efforts latéraux lors de la manoeuvre du levier et n'exige pas de découpe spécifique dans le support coopérant avec ce levier pour assurer la butée de celui-ci en fin de course.

Bien entendu, il va de soi que l'invention ne se limite pas aux exemples de réalisation plus spécialement décrits ci-dessus en référence aux dessins annexés ; elle en embrasse au contraire toutes les variantes.

## Revendications

1. Mécanisme de frein à main pour véhicule automobile, comportant une barre d'actionnement (9) montée à rotation autour d'un axe horizontal (10) et s'étendant transversalement entre deux supports plans (2, 3) parallèles l'un à l'autre, disposés verticalement et solidaires de la caisse du véhicule à proximité des côtés en regard des sièges avant de celui-ci, la barre étant associée dans sa partie centrale à des moyens (11, 12) pour assurer la transmission d'un effort de traction sur au moins un câble de commande (13), l'un des supports (2) étant muni d'un dispositif à encliquetage ou analogue, composé d'une rampe crantée propre à coopérer avec un cliquet porté par un levier de manoeuvre (7) disposé au voisinage d'une des extrémités de la barre d'actionnement au droit de ce support pour permettre la rotation de la barre autour de son axe, ce levier comportant en outre un organe de déverrouillage (14) apte à dégager le cliquet vis-à-vis de la rampe crantée pour libérer le mécanisme, **caractérisé en ce que** la rampe crantée (18) est réalisée sur un secteur amovible (17), apte à être logé et immobilisé dans une de deux rainures (15, 16) de réception de même profil, prévues sur le support (2), ces deux rainures étant symétriques l'une de l'autre par rapport à un plan vertical passant par l'axe (10) de la barre d'actionnement (9).

2. Mécanisme selon la revendication 1, **caractérisé en ce que** le secteur amovible (17) comportant la rampe crantée (18) est serti au montage dans la rainure du support qui le reçoit.

3. Mécanisme selon l'une des revendications 1 ou 2, **caractérisé en ce que** le secteur amovible (17) comporte un organe détrompeur (19), constitué par un talon en relief propre à être engagé dans une mortaise (20) de même profil, ménagée au fond de la rainure (15 ou 16), ce talon occupant une position dissymétrique par rapport aux côtés latéraux du secteur.

4. Mécanisme selon la revendication 3, **caractérisé en ce que** la mortaise (20) recevant le talon (19) du secteur (17) présente un profil en forme de queue d'aronde.

5. Mécanisme selon l'une quelconque des revendications 1 à 4, **caractérisé en ce que** le levier de manoeuvre (7) de la barre d'actionnement (9) est limité dans son débattement par rapport au support (2) par un élément d'arrêt (22, 23), propre à venir en butée sur un des bords d'extrémité (21) de la rainure (15, 16) dépourvue du secteur amovible (17) muni de la rampe crantée (18).

6. Mécanisme selon la revendication 5, **caractérisé en ce que** l'élément d'arrêt est constitué par un rétreint (22) embouti sur le levier (7) ou par un doigt transversal (23) serti sur celui-ci.

7. Mécanisme selon l'une quelconque des revendications 1 à 6, **caractérisé en ce que** le levier de manoeuvre (7) est constitué sous la forme d'un caisson embouti, réalisé au moyen de deux demi-coquilles (7a, 7b), assemblées et serties l'une contre l'autre.

8. Mécanisme selon la revendication 7, **caractérisé en ce que** le levier (7) comporte des bossages latéraux (24), ménagés en relief vers l'intérieur du caisson, ces bossages étant en appui sur des pistes de glissement (25) réparties sur les surfaces en regard du support.

9. Mécanisme selon la revendication 8, **caractérisé en ce que** les bossages (24) sont au nombre de trois et répartis à 120° sur le support (2) autour de l'axe (10) de la barre d'actionnement (9).

10. Mécanisme selon l'une quelconque des revendications 1 à 9, **caractérisé en ce que** la liaison entre la barre d'actionnement (9) et le levier de manoeuvre (7) est réalisée par un moyeu (26) serti ou soudé en bout de la barre et traversant un orifice ménagé dans le support (2), avec interposition d'une bague de frottement (28), plastique ou métallique, le levier étant également serti ou soudé sur le moyeu.

11. Mécanisme selon l'une quelconque des revendications 1 à 9, **caractérisé en ce que** la liaison entre la barre d'actionnement (9) et le levier de manoeuvre (7) est réalisée au moyen de cannelures (32) respectivement prévues sur la barre et sur un moyeu (26) porté par le levier, par une goupille transversale (31) solidarisant le moyeu et la barre, ou encore par emboîtement de l'extrémité de la barre présentant un profil à pans coupés (33) dans un logement homologue du moyeu.

## Patentansprüche

1. Handbremsmechanismus für ein Kraftfahrzeug mit einer Betätigungsstange (9), die um eine horizontale Achse (10) drehbar montiert ist und sich quer zwischen zwei ebenen Trägers (2, 3) erstreckt, die parallel zueinander vertikal angeordnet und mit dem Wagenkasten des Fahrzeugs in der Nähe der gegenüberliegenden Seiten der Vordersitze fest verbunden sind, wobei die Stange in ihrem Mittelteil mit Vorrichtungen (11, 12) zusammenwirkt, um die Übertragung einer Zugkraft auf mindestens ein Steuerkabel (13) zu gewährleisten, und der eine der Träger (2) mit einer Rastvorrichtung oder dergleichen ausgerüstet ist, die aus einer gekerbten Rampe besteht, die mit einer von einem Betätigungshebel (7) getragenen Sperrklinke zusammenwirkt, wobei der Hebel in der Nähe des einen der Enden der Betätigungsstange im Bereich dieses Trägers angeordnet ist, um die Drehung der Stange um ihre Achse zu ermöglichen und dieser Hebel außerdem ein Entriegelungselement (14) aufweist, um die Sperrklinke von der gekerbten Rampe zu lösen, um den Mechanismus freizugeben, **dadurch gekennzeichnet, daß** die gekerbte Rampe (18) an einem umsetzbaren Sektor (17) ausgebildet ist, der in einer von zwei Aufnahmenuten (15, 16) von gleichem Profil eingesetzt werden kann, die am Träger (2) vorgesehen sind, wobei diese zwei Nuten zueinander symmetrisch sind bezüglich einer durch die Achse (10) der Betätigungsstange (9) gehenden vertikalen Ebene.

2. Mechanismus nach Anspruch 1, **dadurch gekennzeichnet, daß** der die gekerbte Rampe (18) aufweisende umsetzbare Sektor (17) bei der Montage in der Nut des ihn aufnehmenden Trägers gebördelt wird.

3. Mechanismus nach einem der Ansprüche 1 oder 2, **dadurch gekennzeichnet, daß** der umsetzbare Sektor (17) ein Unverwechselbarkeitselement (19) aufweist, das aus einem im Relief vorspringenden Fuß besteht, der in eine Ausklinkung (20) von gleichem Profil eingesetzt werden kann, die am Boden der Nut (15 oder 16) ausgebildet ist, wobei dieser Fuß eine unsymmetrische Position bezüglich der Seitenkanten des Sektors einnimmt.

4. Mechanismus nach Anspruch 3, **dadurch gekennzeichnet, daß** die den Fuß (19) des Sektors (17) aufnehmende Ausklinkung (20) ein Schwalbenschwanzprofil hat.

5. Mechanismus nach einem der Ansprüche 1 bis 4, **dadurch gekennzeichnet, daß** der Betätigungshebel (7) der Betätigungsstange (9) in seinem Ausschlag bezüglich des Trägers (2) durch ein Stoppelement (22, 23) begrenzt ist, das in Anschlag gegen eine Außenkante (21) der nicht vom mit der gekerbten Rampe (18) versehenen umsetzbaren Sektor (17) besetzten Nut (15, 16) anschlägt.

6. Mechanismus nach Anspruch 5, **dadurch gekennzeichnet, daß** das Stoppelement aus einem am Hebel (7) durch Tiefziehen ausgebildeten Rücksprung (22) oder einem an diesem angesetzten oder umgebogenen Querfinger (23) besteht.

7. Mechanismus nach einem der Ansprüche 1 bis 6, **dadurch gekennzeichnet, daß** der Betätigungshebel (7) in Form eines tiefgezogenen Kastens gebildet ist, der mittels zweier Halbschalen (7a, 7b) hergestellt ist, die zusammengesetzt und die eine gegen die andere umgebördelt sind.

8. Mechanismus nach Anspruch 7, **dadurch gekennzeichnet, daß** der Hebel (7) seitliche Vorsprünge (24) aufweist, die im Relief zum Inneren des Kastens ausgebildet sind und auf Gleitstrecken (25) anliegen, die über die gegenüberliegenden Flächen des Trägers verteilt sind.

9. Mechanismus nach Anspruch 8, **dadurch gekennzeichnet, daß** drei Vorsprünge (24) ausgebildet und in Winkelabständen von 120° rings um die Achse (10) der Betätigungsstange (9) über den Träger (2) verteilt sind.

10. Mechanismus nach einem der Ansprüche 1 bis 9, **dadurch gekennzeichnet, daß** die Verbindung zwischen der Betätigungsstange (9) und dem Betätigungshebel (7) mittels einer Nabe (26) hergestellt ist, die am Ende der Stange angebördelt oder angeschweißt ist und eine Öffnung durchsetzt, die im Träger (2) ausgebildet ist, wobei ein Reibring (28) aus Kunststoff oder Metall zwischengeschaltet ist und der Hebel ebenfalls an dieser Nabe angebördelt oder angeschweißt ist.

11. Mechanismus nach einem der Ansprüche 1 bis 9, **dadurch gekennzeichnet, daß** die Verbindung zwischen der Betätigungsstange (9) und dem Betätigungshebel (7) mittels Riffelungen (32), die jeweils an der Stange und an der vom Hebel getragenen Nabe (26) vorgesehen sind, durch einen Querstift (31), der die Nabe und die Stange fest miteinander verbindet, oder auch durch Einsetzen des Endes der Stange, das ein Profil mit abgeschrägten Kanten (33) aufweist, in einen entsprechenden Sitz der Nabe hergestellt ist.

## Claims

1. Handbrake mechanism for motor vehicle, comprising an actuating bar (9) mounted in rotation about a horizontal axis (10) and extending crosswise between two plane supports (2, 3) parallel to one another, arranged vertically and integral with the body of the vehicle, close to the sides facing the front seats of the latter, the bar being connected at its central part with means (11, 12) of providing the transmission of a tractive force on at least one control cable (13), one of the supports (2) being equipped with a ratchet device or similar, comprising a notched incline, suitable for cooperating with a ratchet carried by an operating lever (7) arranged close to one of the ends of the actuating bar at right angles with this support in order to allow the rotation of the bar about its axis, this lever moreover comprising a release device (14) suitable for releasing the ratchet vis-à-vis the notched incline to release the mechanism, **characterized in that** the notched incline (18) is produced on a removable sector(17), capable of being housed and immobilized in one of two receiving grooves (15, 16) of the same profile, provided on the support (2), these two grooves being symmetrical with one another with respect to a vertical plane passing through the axis (10) of the actuating bar (9).

2. Mechanism according to claim 1, **characterized in that** the removable sector(17) comprising the notched incline (18) is set during assembly in the groove of the support receiving it.

3. Mechanism according to one of claims 1 or 2, **characterized in that** the removable sector(17) comprises a locating device (19), constituted by a projecting tenon suitable for engaging in a mortise (20) of the same profile, provided at the bottom of the groove (15 or 16), this tenon occupying a dissymmetrical position with respect to the lateral sides of the sector.

4. Mechanism according to claim 3, **characterized in that** the mortise (20) receiving the tenon (19) of the sector (17) is shaped as a dovetail in profile.

5. Mechanism according to any one of claims 1 to 4, **characterized in that** the operating lever (7) of the actuating bar (9) is limited in its movement in relation to the support (2) by a stopping element (22, 23), suitable for coming into abutment on one of the end edges (21) of the groove (15, 16) without the removable sector(17) equipped with the notched incline (18).

6. Mechanism according to claim 5, **characterized in that** the stopping element is constituted by a necked section (22) stamped on the lever or by a cross-pin (23) set on the latter.

7. Mechanism according to any one of claims 1 to 6, **characterized in that** the operating lever (7) is constituted in the form of a stamped casing, produced by means of two half-shells (7a, 7b), assembled and set one against the other.

8. Mechanism according to claim 7, **characterized in that** the lever (7) comprises lateral bosses (24), provided projecting towards the inside of the casing, these bosses being supported on sliding tracks (25) distributed over the surfaces facing the support.

9. Mechanism according to claim 8, **characterized in that** the bosses (24) are three in number and are distributed at 120° on the support (2) around the axis (10) of the actuating bar (9).

10. Mechanism according to any one of claims 1 to 9, **characterized in that** the connection between the actuating bar (9) and the operating lever (7) is provided by a hub (26) set or welded onto the end of the bar and crossing an orifice provided in the support (2), with the interposition of a plastic or metal friction ring (28), the lever also being set or welded onto the hub.

11. Mechanism according to any one of claims 1 to 9, **characterized in that** the connection between the actuating bar (9) and the operating lever (7) is provided by means of channels (32) provided respectively in the bar and in a hub (26) carried by the lever, by a cross pin (31) interlocking the hub and the bar, or also by fitting the end of the bar having a profile with the corners cut off (33) into an equivalent housing in the hub.
